# EUROPEAN PATENT SPECIFICATION

(11) **EP 0 443 625 B1**
(45) Date of publication and mention of the grant of the patent: **11.05.1994**
(21) Application number: 91102679.7
(22) Date of filing: 23.02.1991
(51) Int. Cl.: F01N 3/02, C04B 38/00

(54) **Exhaust filter element and exhaust gas-treating apparatus**
Filterelement und Vorrichtung zur Reinigung von Abgasen
Elément filtrant et appareil pour le traitement des effluents gazeux

(30) Priority: 23.02.1990 JP 43022/90; 23.03.1990 JP 73739/90
(43) Date of publication of application: 28.08.1991
(73) Proprietor: MATSUSHITA ELECTRIC INDUSTRIAL CO., LTD., Kadoma-shi, Osaka-fu, 571 (JP)
(72) Inventor: Yonemura, Masaaki, Nara-shi, Nara-ken (JP); Kusuda, Takao, Ashiya-shi, Hyogo-ken (JP)
(74) Representative: Eisenführ, Speiser & Partner

(56) References cited:
- EP-A- 0 212 396
- EP-A- 0 327 439
- DE-A- 3 024 539

## Description

### PRIOR ART

The present invention relates to an exhaust filter element and an exhaust gas-treating apparatus using the same capable of removing particulates contained in a gas exhausted from a Diesel engine and the like and incinerating said particulates to be regenerated.

A method of removing particulates contained in an exhaust gas by the use of a filter has been well investigated. That is to say, said particulates are caught by means of a ceramic honeycomb filter made of cordierite or fiber ceramic and the accumulated particulates are incinerated as they are. The firing by means of an electric heater, the incineration by means of a burner and the like have been used as incinerating means. On the other hand, a method of incinerating particulates by irradiating them with a microwave has been proposed in DE-A-3024539. According to this method, a mat made of silica fibers is wound around a punching metal to form a filter and said filter is disposed in a gas exhausted from a Diesel engine to remove the particulates and additionally the accumulated particulates are irradiated with a microwave through a wave guide provided in a filter vessel to be incinerated.

According to this method, said mat made of silica fibers is used as a material of the filter, so that said cylindrical punching metal is required as a support. In addition, it has been difficult to give a complicated shape to the filter and a filtering area of the filter is small in comparison with a volume of the apparatus and thus the filter is apt to be choked. Accordingly, also a pressure drop is increased and thus the particulates must be frequently incinerated. Moreover, the filter made of silica fibers has been very easily blown away by a stream of exhaust gas to be damaged.

On the other hand, according to a method disclosed in JP-A-60-137413, a filter (for example a honeycomb filter) is made of a material having a high dielectric factor and particulates are irradiated with a microwave by means of a generator provided in said filter to be incinerated.

According to this method, the honeycomb filter is made of titanium oxide and thus a heat capacity of the filter is increased in the same manner as in a cordierite honeycomb. Accordingly, a long time is necessary to rise a temperature of said particulates upto an incineratable temperature and an increased consumption of energy has been required.

Furthermore, in case of the honeycomb filter, it is heated by the irradiation of a microwave from its central portion, so that the particulates accumulated in the vicinity of the inlet face of the filter are left unincinerated. Accordingly, if the particulates are accumulated again under this condition, not only the usable life time of the filter is shortened but also the amount of the sediments in the vicinity of said inlet is increased, so that at last an opened portion of honeycomb is choked and thus the filter lacks in long-term reliability.

EP-A-0 212 396 defining the closest prior art from which the invention proceeds discloses an exhaust filter element and furthermore shows a honeycomb structure in which adjacent cell ends of the honeycomb structure are alternately plugged. The particulates accumulated are burned by the radiation of micro waves on a soot filter. This soot filter comprises a filter mat supported by a filter supporter which is made of dielectric material. The filter supporter which does not relate to the filtration of the particulates is disposed at the outer flow side of the filter mat with respect to the exhaust gas stream resulting in the disadvantageous effect that most of the heat generated cannot be utilized for heating the filter mat.

### SUMMARY OF THE INVENTION

In accordance with the present invention, there is provided an exhaust filter element for use in an exhaust gas treating apparatus including a source of micro waves, said filter element having a ceramic honeycomb structure, in which adjacent cell ends of the honeycomb structure are alternately plugged, characterized in that said filter element comprises dielectric material having a higher dielectric factor at at least a portion of an inflow side and/or an outer circumference portion than at a center portion and/or a discharge side.

In the filter of the present invention, the upstream portion of the filter itself is higher dielectric than the downstream portion. This leads to the effect that the heat generated by the absorption of micro waves is efficiently utilized to burn the particulates caught by the filter and to complete them without damage by relaxation the stress caused by the heat. According to the inventive structure, the particulates arround the inlet which normally cannot be burned because of cooling by the air for burning and the difficult concentration of the micro waves are burned by the heat which is generated by making the filter itself of a higher dielectric material.

Further advantageous embodiments are defined in the claims 2 to 12.

### BRIEF DESCRIPTION OF THE DRAWINGS

Fig. 1 is a perspective view of a main portion of an exhaust filter element according to one embodiment of the present invention;
Fig. 2 is a rough sectional view of the exhaust filter element of Fig. 1;
Fig. 3 is a schematic sectional view of an exhaust gas-treating apparatus of one embodiment of the present invention;
Fig. 4 is a schematic sectional view of an exhaust filter element provided with a portion having a high dielectric factor at an end on the inflow side;
Fig. 5 is a schematic sectional view of an exhaust filter element provided with a portion having a high dielectric factor in an outermost circumferential portion; and
Fig. 6 is a schematic sectional view of an exhaust filter element of which outer circumferential portion is highly dielectric.

### DETAILED DESCRIPTION OF THE INVENTION

The present invention relates to an exhaust filter element having a ceramic honeycomb structure, in which adjacent cell ends are alternately plugged, wherein the filter element is made of a material having a higher dielectric factor at at least a portion of an inflow side and/or an outer circumference portion than at an inside portion.

In addition, the present invention relates to an exhaust gas-treating apparatus which comprises said exhaust filter element and a means for irradiation of the exhaust filter element with a microwave to incinerate particulates accumulated on the exhaust filter element, whereby being regenerated.

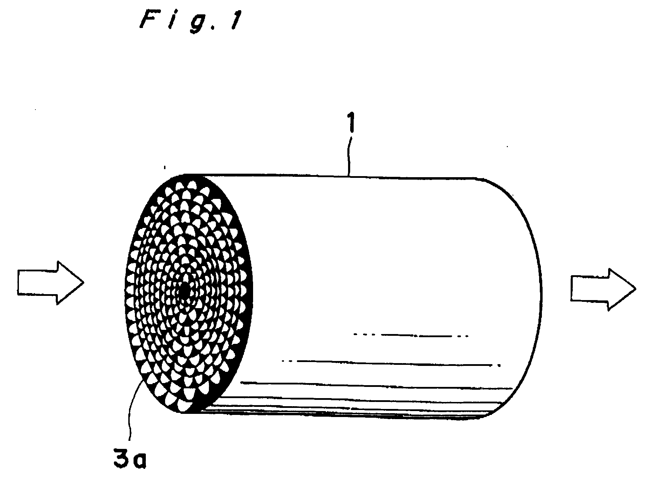

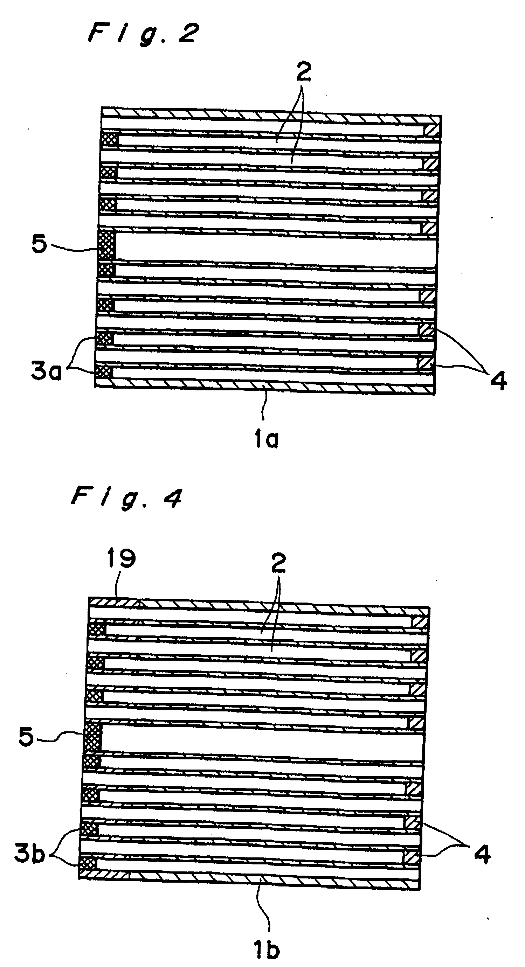

One example of a construction of the exhaust filter element according to the present invention is shown in Fig. 1 and Fig. 2 (a longitudinal sectional view). Reference numeral 1a designates a filter, reference numeral 2 designating a cell having a honeycomb structure, reference numeral 3a designating a plug on the inflow side for an exhausted gas, and reference numeral 4 designating a plug on the discharge side for the exhausted gas.

In the exhaust filter element according to the present invention, said cells composing said ceramic honeycomb structure are alternately plugged at both ends thereof as shown in Fig. 2. The cell 2 is made of a suitable incombustible porous material. When the combustion gas is discharged outside through pores of said porous material, particulates (mainly carbon particles), which are unburnt components, are caught by the porous material composing the cells. The caught particulates reduce a filtering efficiency of the filter element, so that they are continuously or intermittently incinerated to regenerate the filter element.

According to the present invention, this incineration is carried out by combining the material having a high dielectric factor with the irradiation with a microwave.

The porous material composing the cell used in the present invention includes materials obtained by sintering heat-resisting inorganic fibers, such as aluminosilicate fiber, aluminoborosilicate, silicate fiber, silica fiber, alumino fiber and rock wool, and the like together with clay such as selisite, kaolinite, silicic acid, magnesia and alumina insulating brick material, and the like. It is usually sufficient that said inorganic fibers and similars and said clay and similars are dispersed in water together with suitable high molecular adhesives, such as vinyl acetate-acrylonitrile copolymer emulsion, polyvinylalcohol and the like, to be subjected to a paper-manufacturing process, whereby obtaining a sheet, and a honeycomb structure is produced from said sheet.

A material having a dielectric factor higher than that of said inside material of honeycomb structure can be obtained by adding various kinds of micro wave dielectric ceramic material, such as silicon carbide, titanium oxide, zinc oxide and alkaline earth metal titanate (for example strontium titanate and barium titanate), to the above described heat-resisting inorganic fibers and clay and similars, and subjecting the resulting mixture to a paper-manufacturing process or molding together with an organic bind agent in the same manner as in the above described cell material followed by firing, and then sintering at a high temperature of from about 1000 °C to about 1400 °C.

It is preferable that the dielectric ceramic material is used in the amount of from about 10 % to about 50 % by weight, preferably about 15 % to about 30 % by weight, based on the total amount of the inorganic fibers, clay and similars and the dielectric ceramic material. In the case where the dielectric ceramic material is incorporated in merely the plug material on the inflow side, it is used in an increased amount. In the case where the dielectric ceramic material is incorporated in the inflow side of honeycomb structure, its amount may be gradually reduced toward the discharge side. It is usually preferable that the dielectric factor is gradually reduced over a length of from about 5 % to about 50 %, preferably from about 10 % to about 30 %, of the total length of the exhaust filter element. In addition, the dielectric factor may be gradually reduced from the outermost circumference to the inside. In this case, it is preferable that the dielectric factor is gradually reduced over from about 5 % to about 35 %, preferably from about 20 % to about 30 %, of a radius of the exhaust filter element.

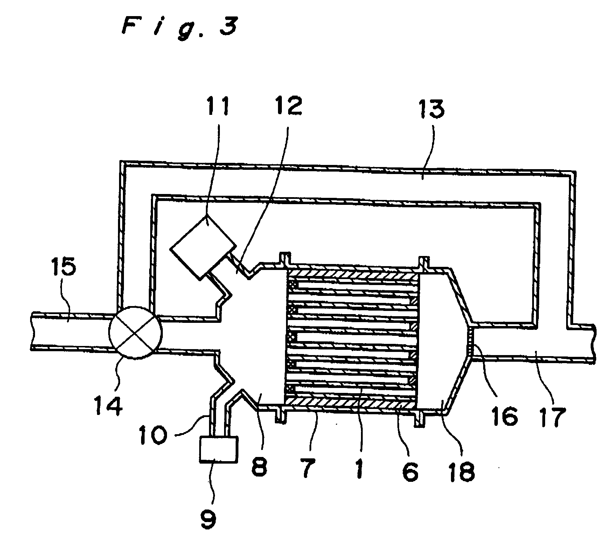

A schematic sectional view of one embodiment of the exhaust filter element according to the present invention is illustrated in Fig. 3. An exhaust filter element 1a is disposed in a case 7 provided between an inflow chamber 8 and a discharge chamber 18. A micro wave generator 11 is mounted on the inflow side.

The micro wave generator 11 may be used of, for instance, 2.45 GHe with the about 200 W to about 1200 W as input.

With the above described construction, the dielectric factor of a portion, where a large amount of soots in an exhaust gas are collected, in particular a portion on the inflow side, of the filter element is increased, so that the micro wave can be concentrated on said portion where a large quantity of soots are collected at the regeneration of the filter by incinerating the soots.

In addition, in case of a honeycomb filter element, the irradiation with the micro wave begins the heating from the central portion of said filter element while the vicinity of an outer circumference of the filter element is difficult to rise a temperature due to a removal of heat toward a cushion material and the like, so that the particulates accumulated on this portion can not be incinerated and remain. As the result that the central portion is heated, the filter element is liable to be cracked due to a great thermal stress resulting from a temperature gradient in said outer circumferential portion, and damaged. These problems can be solved by using a material having a dielectric factor higher than that of an inside material in the outer circumferential portion.

Furthermore, the generation of cracks and the like due to the localization of heat can be prevented by gradually reducing the dielectric factor toward the inside.

The exhaust filter element, the method of producing the same and the exhaust gas-treating apparatus according to the present invention are illustrated with reference to the Examples.

### Example 1

20 parts by weight of aluminosilicate fiber having a mean diameter of about 3 µm and chopped in a length of 0.1 to 10 mm were sufficiently dispersed in 1000 parts by weight of water to obtain a suspension. On the other hand, 15 parts by weight of selisite clay as the ceramic raw material powders were suspended in 50 parts by weight of water. The fibrous suspension and the suspension of the ceramic raw material powders were mixed with stirring. Subsequently, 1 part by weight of a vinyl acetate-acrylonitrile copolymer emulsion as an organic binding agent was added to be sufficiently mixed with stirring followed by adding a high molecular coagulant to aggulutinate the aluminosilicate fibers, the selisite clay and the organic bind agent each other to give a flock-like suspension. The obtained flock-like suspension was diluted with water to 3000 parts by weight and then subjected to a paper-manufacturing process in a Fortlinear paper machine to produce a sheet.

On the other hand, 10 parts by weight of pulverized aluminosilicate fiber, 15 parts by weight of selisite clay and 12 parts by weight of silicon carbide whisker were kneaded together with an aqueous solution of polyvinylalcohol to obtain a pasty plug raw material A; and 20 parts by weight of aluminosilicate and 15 parts by weight of selisite clay were kneaded in the same manner to obtain a pasty plug raw material B.

The obtained sheet was divided into two parts and one of them was shaped into corrugated shape in a corrugate machine having two pieces of toothed roll and simultaneously adhesives obtained by blending said pulverized aluminosilicate fibers and selisite clay were applied to corrugate ridges with putting the plug raw material A onto a one face of the corrugated sheet at one end portion, and onto the ridge the other flat sheet was adhered. The above described adhesives were applied to the corrugate ridges on the back face of the above obtained corrugated cardboard-shaped formation with putting the plug raw material B on the back face at the other end portion, and then the resultant was cylindrically wound up to a honeycomb-shaped material. This honeycomb-shaped material was an assemble of numerous cells; one type of the cell was sealed up at the end of the inflow side of exhaust gas with the plug raw material A, and opened at the other end, and the other type of cell was opened at the end of the inflow side and sealed up with the plug raw material B at the other end; and the both types of cell were assembled alternately. Upon firing this formation for 2 hours in an electric furnace heated to 1250 °C, organic substances were burnt and the aluminosilicate fibers and selisite clay were sintered to ceramics, by which a filter element having a fibrous ceramic honeycomb structure was obtained. Here, it was observed that a plug filled with the plug raw material A was sintered to the aluminosilicate fibers and selisite clay in a portion where a surface of said silicon carbide whisker was slightly oxidized to silica, that is the integration was achieved by the compounding. Fig. 1 is a perspective view of this embodiment and Fig. 2 is a schematic sectional view of this embodiment. Reference numeral 1a designates an exhaust filter element comprising cells 2 composed of a ceramic sheet formed in a corrugated honeycomb shape, said cell 2 being provided with an inflow side plug 3a incorporated with the silicon carbide whisker put in inflow end of the half of the cells and a discharge side plug 4 put in the discharge end of the remaining cells and said inflow side plug 3 and said discharge side plug 4 being alternately arranged. The central portion is a portion of a core 5, on which the corrugate sheet was wound up, and similarly provided with the inflow side plug material A therein.

This exhaust filter element 1a was installed on a regenerating system shown in Fig. 3. The exhaust filter element 1a was covered with an insulating cushion material 6 made of aluminosilicate fibers and housed in a case 7, an inflow chamber 8 provided at an inflow side of exhaust gas of the case 7 being provided with an air pipe 10 for supplying air by means of an air pump 9 opened therein and a wave guide 12 connected with a micro wave generator 11 was opened therein, and said inflow chamber 8 was provided with an exhaust gas-introducing pipe 15 having a valve 14 for cutting off an exhaust gas to introduce said exhaust gas into a by-pass 13. On the other hand, the exhaust filter element 1a is provided with an exhaust chamber 18 with a discharging pipe 17 having a micro wave-cutting off plate 16 opened connected therewith. Said by-pass 13 is opened in a midway of said discharging pipe 17. In this regenerating system, the exhaust gas is usually introduced into the inflow chamber 8 through said exhaust gas-introducing pipe 15 and then discharged in air through the exhaust pipe 17 from said exhaust chamber 18 with removing particulates by means of the exhaust filter element 1a.

When a given amount of particulates was accumulated on the exhaust filter element 1a, said valve 14 was operated to flow the exhaust gas into the by-pass 13 and simultaneously cut off at the side of the inflow chamber 8. Successively, said air pump 9 was operated to supply the inflow chamber 8 with air for use in the combustion of particulates in an appointed flow rate. On the other hand, also said micro wave generator 11 was operated to irradiate the exhaust filter element 1a with a micro wave through said wave guide 12. Thus, the incineration of the particulates was started in the vicinity of the center of the exhaust filter element 1a by their own heating. In addition, at an inlet of the exhaust filter element 1a, the dielectric factor of the plug 3 on the inflow side was increased by the incorporation of said silicon carbide whisker, so that the heating occurs by the irradiation with a micro wave. The particulates, which was left unincinerated on the end face on the inflow side and its circumference, in a conventional exhaust filter element, could be incinerated by this heating and thus the exhaust filter element could be perfectly regenerated.

In this embodiment, air was supplied to burn the particulates. Even though the end portion on the inflow side of the exhaust filter element was cooled by this air, the particulates accumulated on the end face and the end portion could be perfectly incinerated.

### Example 2

The suspension obtained by coagulating the mixture of aluminosilicate fibers, selisite clay and the like prepared according to Example 1 is called a suspension A. On the other hand, the suspension obtained by coagulating a mixture of 20 parts by weight of aluminosilicate fiber, 12 parts by weight of selisite clay and 9 parts by weight of titanium oxide is called a suspension B. The paper-manufacturing process was carried out with simultaneously supplying a net with said suspensions A and B from separate supply ports in a Fortlinear paper machine to produce a sheet containing titanium oxide in a given width from the both side edges of the sheet.

A plug raw material C was obtained according the same manner as in the Example 1 except that 14 parts by weight of aluminosilicate fiber, 9 parts by weight of selisite clay and 9 parts by weight of titanium oxide were used.

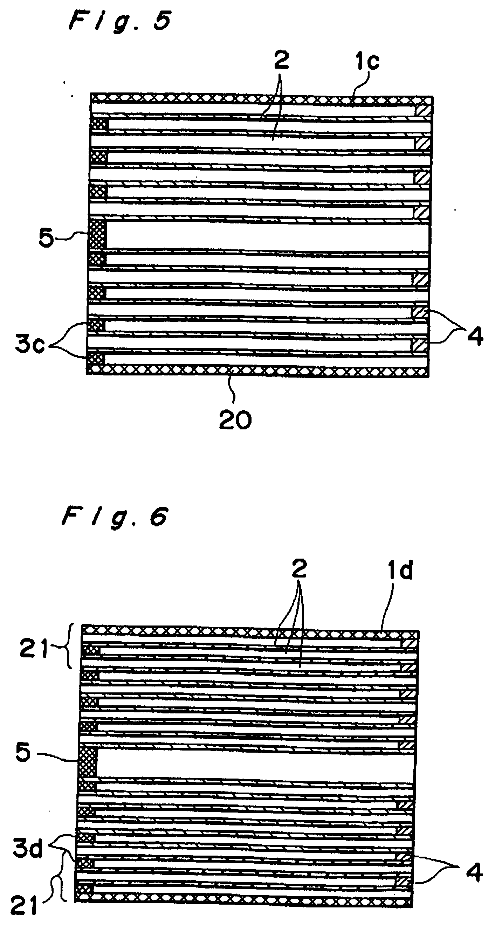

The resulting sheet was divided into two parts and said plug raw material C was filled on the side containing titanium oxide of the sheet while said plug raw material B was filled on the other side in the same manner as in Example 1 to obtain an exhaust filter element 1b having a highly dielectric plug 3b on the inflow side shown in Fig. 4. Referring to Fig. 4, reference numeral 19 designates a highly dielectric portion made of a titanium oxide-containing fibrous ceramic prepared from the suspension B.

This exhaust filter element 1b was installed in said regenerating system shown in Fig. 3 in the same manner as in Example 1 with the result that not only the end face on the inflow side but also the inside of the cell could be speedily regenerated in comparison with Example 1.

Because titanium oxide has a high dielectric factor and not only the plug but also the fibrous ceramic is highly dielectric and thus a heating value on the inflow side was remarkably increased. That is to say, a heat generated in the plug heated air supplied and this air promoted the incineration of the particulates accumulated with subsequently heating the fibrous ceramic in Example 1. On the contrary, also the fibrous ceramic itself generated heat, so that the particulates could be directly incinerated in Example 2.

The length of said titanium oxide-containing highly dielectric portion in the exhaust filter element of 150 mm long is preferably 15 to 40 mm. The content of titanium oxide in the longitudinal direction of the exhaust filter element was analyzed by the EDX with the result that the mixing of the suspension A and the suspension B was caused within 15 mm during the paper-manufacturing process. Accordingly, the exhaust filter element with the gradually reduced content of titanium oxide can be produced by supplying several batches of suspensions containing titanium oxide in stepwisely reduced amount, and simultaneously carrying out the paper-manufacturing process.

The highly dielectric material to be incorporated is not limited by the silicon carbide whisker and titanium oxide disclosed in Examples. Also silicon carbide powders, a zinc oxide whisker and the like can be used. These dielectric materials exhibit the same results in regeneration as obtained from the silicon carbide whisker.

The fibrous ceramic sintered body is a porous ceramic having a structure, in which fibrous ceramics are laminated, a porosity of usually 60 to 80 % and a remarkably reduced heat capacity, so that the incorporation of the highly dielectric material can easily and sufficiently rise the temperature by irradiating with a micro wave without spoiling characteristics of the fibrous ceramic.

Accordingly, as to the exhaust filter element of corrugated honeycomb structure obtained by dividing the sheet formation made of this material into two parts before firing, subjecting one of the resulting two parts to the corrugating process to be adhered to the other part and wound up, whereby forming a cylindrical corrugated honeycomb, and alternately closing opened portions of the resulting cylindrical corrugated honeycombs with the plug material followed by firing, the vicinity of the inflow side could be heated to a high temperature by irradiating with a micro wave as a result of giving a high dielectric factor to in particular the plug material on the inflow side or a given portion on the inflow side of the corrugated honeycomb. Thus, in the incineration of the particulates by irradiating with a micro wave, even the particulates, which are liable to be left unincinerated on the end face on the inflow side and in its vicinity in a conventional device, can be easily incinerated.

### Example 3

20 parts by weight of aluminosilicate fibers having a mean diameter of 3 µm and chopped in a length of 0.1 to 10 mm were sufficiently dispersed in 1000 parts by weight of water to a suspension. In addition, 15 parts by weight of selisite as the ceramic raw material powder were suspended in 50 parts by weight of water. The fibrous suspension obtained was mixed with said suspension of ceramic raw material powders with stirring. Subsequently, 1 part by weight of a vinyl acetate-acrylonitrile copolymer emulsion as the organic bind agent was added to the suspension, and sufficiently mixed with stirring; and then a high molecular coagulant was added thereto to agglutinate the aluminosilicate fibers, selisite clay and organic bind agent with each other to give a flock-like suspension. The agglutinated suspension obtained was diluted with 3000 parts by weight of water and then subjected to the paper-manufacturing process in the usual Fortlinear paper machine to produce a sheet A.

In addition, 10 parts by weight of selisite clay and 8 parts by weight of titanium oxide powders were added to the same suspension as the above described aluminosilicate fibrous suspension, and the resulting mixture was similarly agglutinated followed by subjecting to the paper-manufacturing process to produce a titanium oxide-containing sheet B.

On the contrary, a plug raw material A paste was prepared by mixing 20 parts by weight of pulverized aluminosilicate fibers, 9 parts by weight of selisite clay and 9 parts by weight of titanium oxide with an aqueous solution of polyvinylalcohol; while a plug raw material B paste prepared using 20 parts by weight of aluminosilicate fibers and 15 parts by weight of selisite clay.

The obtained sheet A was divided into two parts and one of them was molded in a corrugated shape in a corrugate machine having two pieces of toothed roll and simultaneously adhesives obtained by blending said pulverized aluminosilicate fibers and selisite clay were applied to a corrugate ridge with putting said plug raw material B onto one side face of the corrugate and adhere a sheet thereto. The above described adhesives were applied to a corrugate ridge of the obtained corrugated cardboard-shaped formation and simultaneously the corrugated cardboard-shaped formation was cylindrically wound up with putting the above described plug raw material B onto the other side face, and its outer shell was surrounded by at least one layer of sheet B to obtain a honeycomb-shaped material. This material has a construction that one end of a half of the formed honeycomb cells is sealed up with said plug raw material A on the inflow side of exhaust gas while the other end is opened; and the opposite end of the remaining honeycomb cells, which are adjacent to the aforementioned cells, is sealed up with the plug raw material B. Upon firing this material at 1250 °C for 2 hours in an electric furnace, organic substances were burnt and the aluminosilicate fibers and selisite clay were sintered with each other into ceramics, by which a filter element having a fibrous ceramic honeycomb structure was obtained. The material composing this exhaust filter element has a porosity of 73 % and also the heat capacity at room temperature was small in accordance with said porosity. Fig. 5 is a schematic diagram showing this embodiment. Reference numeral 1c designates an exhaust filter element comprising cells 2 composed of a ceramic sheet formed into a corrugated honeycomb shape, said cell 2 being provided with an inflow side plug 3c incorporated with titanium oxide in one end thereof, a discharge side plug 4 put in the other end thereof; and titanium oxide-containing fibrous ceramics (highly dielectric portion 20) covering an outer shell thereof, and said inflow side plug 3c and said discharge side plug 4 being alternately arranged. The central portion is a core 5, on which the corrugated cardboard-shaped formation was wound up, and provided with the inflow side plug material A put therein.

Said exhaust filter element 1c was installed on a regenerating system shown in Fig. 3 in the same manner as in Example 1. In this regenerating system, the exhaust gas is usually introduced into an inflow chamber 8 through an exhaust gas-introducing pipe 15 and then discharged in air through an exhaust pipe 17 from an exhaust chamber 18 with removing particulates by means of the exhaust filter element 1c. When an appointed quantity of particulates was accumulated in the exhaust filter element 1c, a valve 14 is operated to flow the exhaust gas in the by-pass 13 and simultaneously cut off the side of said inflow chamber 8. Successively, an air pump 9 is operated to supply the inflow chamber 8 with air for use in the combustion of particulates in an appointed flow rate. On the other hand, also a micro wave generator 11 is operated to irradiate the exhaust filter element 1c with a micro wave through a wave guide 12. Thus, the incineration of the particulates is started in the vicinity of the center of exhaust filter element 1c by their own heating. In addition, at said inflow side plug 3c and said outer shell 20 of the exhaust filter element 1c, the dielectric factor is increased by the incorporation of titanium oxide, so that the heating occurs by the irradiation with a micro wave. The particulates, which are left unincinerated in a conventional device, on the end face on the inflow side, its circumference and the outer shell could be incinerated by the conduction of this heat and thus the exhaust filter element could be perfectly regenerated.

In this preferred embodiment, air was supplied to burn the particulates. Even though the end portion on the inflow side of the exhaust filter element was cooled by this air, also the particulates accumulated on the end face and the end portion could be perfectly incinerated on account of the generation of heat from the titanium oxide-containing plug.

### Example 4

A suspension A was obtained by agglutinating a mixture comprising aluminosilicate fibers, and selisite clay in the same manner as in Example 1. On the other hand, 20 parts by weight of aluminosilicate fiber, 10 parts by weight of selisite clay and 6 parts by weight of titanium oxide were mixed and the resulting mixture was agglutinated to obtain a suspension B. A valve was provided so as to supply a Fortlinear paper machine with said suspensions A and B, respectively. In this Fortlinear paper machine, at first the suspension B was subjected to the paper-manufacturing process to give a sheet having a length enough to compose first to third laps from an outer side of the exhaust filter element, and successively the suspension A was supplied with gradually changing over both valves, and subjected to the paper-manufacturing process, by which a paper for one piece of exhaust filter element was obtained. Subsequently, the operation was changed over to the suspension B again. The above described process was repeated. This sheet contains titanium oxide in a given section and its content was gradually changed in the paper-manufacturing direction. Two kinds of sheet, that is, a sheet for use in a corrugated plate and a sheet for use as a flat plate, were prepared to produce an exhaust filter element 1d by the use of the plug raw materials A and B in the same manner as in Example 3.

In said exhaust filer element 1d produced from these sheets, said first to third laps from an outer circumference (highly dielectric portion 21) and a plug 3d on the inflow side were formed of a titanium oxide-containing highly dielectric material. A content of titanium oxide was largest in said outer circumference and gradually reduced toward the third lap. In addition, upon changing over the valves for the suspension A and B in the moment in the above described manufacturing process, a sheet, in which said content of titanium oxide was digitally changed, could be produced. Furthermore, even in the case where titanates, such as strontium titanate and calcium titanate, were used in addition to titanium oxide, a composite could be obtained in the similar manner and thus said highly dielectric material could be obtained.

An experiment was carried out by the use of this exhaust filter element in the same manner as in Example 3 with the results that particulates on an end portion on the inflow side and in the vicinity of the outer circumference could be perfectly incinerated and also a temperature gradient generated within the exhaust filter element was smaller than that in Example 3. Accordingly, a regenerating system having a longer reliable useful life time can be more effectively composed.

Besides, the fibrous ceramic sintered bodies according to the above described respective Examples are porous ceramics having a structure that fibrous ceramics are laminated and have characteristics that the porosity is 60 to 80 % and the heat capacity is remarkably reduced. Accordingly, this material can be easily heated to a high temperature when irradiated with a micro wave without spoiling characteristics of the fibrous ceramics by incorporating the highly dielectric material therein.

## Claims

1. An exhaust filter element for use in an exhaust gas treating apparatus including a source (11) of micro waves, said filter element (1a) having a ceramic honeycomb structure (2), in which adjacent cell ends of the honeycomb structure (2) are alternately plugged, characterized in that said filter element (1a) comprises dielectric material having a higher dielectric factor at at least a portion of an inflow side (3a; 3b; 3c; 3d; 19) and/or an outer circumference portion (20; 21) than at a center portion (5) and/or a discharge side (4).

2. An exhaust filter element of Claim 1, wherein a dielectric factor of a plug material on the inflow side (3a; 3b; 3c; 3d; 19) is larger than that of a material of honeycomb (2).

3. An exhaust filter element of Claim 2, wherein said plug material is composed of the same material as honeycomb (2) and a material having a dielectric factor larger than that of honeycomb.

4. An exhaust filter element of Claim 1, wherein said honeycomb structure (2) is a corrugated honeycomb structure constituted by laminating corrugated plates and flat plates made of a ceramic sheet alternately and winding them, and said dielectric factor of the cell is higher at said inflow side over a given length.

5. An exhaust filter element of Claim 1, wherein said honeycomb structure (2) is a corrugated honeycomb structure composed by laminating corrugated plates and flat plates made of a ceramic sheet alternately and winding them, and said dielectric factor is gradually reduced from said inflow side of gas to a discharge side of gas.

6. An exhaust filter element of Claim 1, wherein said outer circumferential portion (20) of ceramic honeycomb structure (2) is an outermost protective layer.

7. An exhaust filter element of Claim 1, wherein said outer circumferential portion (21) of ceramic honeycomb structure (2) consists of an outermost circumferential portion and several layers of honeycomb from an outer circumference, and said dielectric factor is gradually reduced toward an inner layer.

8. An exhaust filter element of any one of Claims 1 to 7, wherein said ceramic honeycomb structure is composed of heat-resisting inorganic fibers and ceramic raw material powders.

9. An exhaust filter element of Claim 8, wherein said heat-resisting inorganic fibers are at least one kind selected from the group consisting of silica fibers, aluminosilicate fibers, alumina fibers and aluminoborosilicate fibers.

10. An exhaust filter element of Claim 1 to 8, wherein the ceramic structure is composed of a carbide, an oxide or a titanate selected from the group consisting of silicon carbide, titanium oxide, zinc oxide, strontium titanate and barium titanate in addition to the heat-resisting inorganic fibers and said ceramic raw material powders.

11. An exhaust filter element of Claim 10, wherein said carbide and oxide to be incorporated are used in the form of whisker or fiber.

12. An exhaust gas-treating apparatus comprising an exhaust filter element and means for irradiating the exhaust filter element with a micro wave, characterized in that the apparatus is provided with said exhaust filter element as set forth in any one of claims 1 to 11.

## Patentansprüche

1. Abgasfilterelement zur Anwendung in einer Abgasbehandlungsvorrichtung mit einer Mikrowellenquelle (11), wobei das Filterelement (1a) eine Keramikwabenstruktur (2) hat, in der benachbarte Zellenden der Wabenstruktur (2) abwechselnd verschlossen sind, dadurch gekennzeichnet, daß das Filterelement (1a) dielektrisches Material mit einem höheren Dielektrizitätskoeffizienten an mindestens einem Teil einer Einströmseite (3a; 3b; 3c; 3d; 19) und/oder einem äußeren Umfangsabschnitt (20; 21) als an einem Mittelteil (5) und/oder einer Auslaßseite (4) umfaßt.

2. Abgasfilterelement nach Anspruch 1, bei dem ein Dielektrizitätskoeffizient eines Verschlußmaterials an der Einströmseite (3a; 3b; 3c; 3d; 19) größer ist als der eines Materials der Wabe (2).

3. Abgasfilterelement nach Anspruch 2, bei dem das Verschlußmate- rial aus dem gleichen Material wie die Wabe (2) und einem Material mit einem größeren Dielektrizitätskoeffizienten als der der Wabe zusammengesetzt ist.

4. Abgasfilterelement nach Anspruch 1, bei dem die Wabenstruktur (2) eine gewellte Wabenstruktur ist, die durch abwechselndes Schichten von aus einer Keramikbahn hergestellten gewellten Platten und ebenen Platten und Wickeln derselben gebildet wird, und bei dem der Dielektrizitätskoeffizient der Zelle an der Einströmseite über eine vorgegebene Länge höher ist.

5. Abgasfilterelement nach Anspruch 1, bei dem die Wabenstruktur (2) eine gewellte Wabenstruktur ist, die durch abwechselndes Schichten von aus einer Keramikbahn hergestellten gewellten Platten und ebenen Platten und Wickeln derselben gebildet wird, und bei dem der Dielektrizitätskoeffizient von der Einströmseite des Gases zu einer Auslaßseite des Gases allmählich reduziert ist.

6. Abgasfilterelement nach Anspruch 1, bei dem das äußere Rand teil (20) der keramischen Wabenstruktur (2) eine außenliegende Schutzschicht ist.

7. Abgasfilterelement nach Anspruch 1, bei dem äußere Umfangsabschnitt (21) der keramischen Wabenstruktur aus einem außenliegenden Umfangsabschnitt und verschiedenen Schichten der Wabe von einem äußeren Umfang her besteht, und bei dem der Dielektrizitätskoeffizient zu einer inneren Schicht allmählich reduziert ist.

8. Abgasfilterlement nach einem der Ansprüche 1 bis 7, bei dem die keramische Wabenstruktur aus wärmebeständigen anorganischen Fasern und keramischen Rohmaterialpulvern zusammengesetzt ist.

9. Abgasfilterelment nach Anspruch 8, bei dem die wärmebeständi- gen anorganischen Fasern mindestens eine Art ist, die aus der aus Siliziumdioxidfasern, Alumosilikatfasern, Aluminiumoxidfasern und Alumoborsilikatfasern bestehenden Gruppe ausgewählt wurde.

10. Abgasfilterelment nach Anspruch 1 bis 8, bei dem die Keramik- struktur zusätzlich zu den wärmebeständigen anorganischen Fasern und den keramischen Rohmaterialpulvern aus einem Karbid, einem Oxid oder einem Titanat zusammengesetzt ist, das aus der aus Siliziumkarbid, Titanoxid, Zinkoxid, Strontiumtitanat und Bariumtitanat bestehenden Gruppe ausgewählt wurde.

11. Abgasfilterelement nach Anspruch 10, bei dem das zu inkorporierende Karbid und das Oxid in der Form von Whisker oder Faser verwendet wird.

12. Abgasbehandlungsvorrichtung, die ein Abgasfilterelement und ein Mittel zum Bestrahlen des Abgasfilterelementes mit einer Mikro- welle umfaßt, dadurch gekennzeichnet, daß die Vorrichtung mit einem Abgasfilterelement nach einem der Ansprüche 1 bis 11 versehen ist.

## Revendications

1. Elément de filtration des gaz d'échappement, destiné à être utilisé dans un appareil de traitement de gaz d'échappement, comprenant une source (11) de microondes, l'élément de filtration (1a) ayant une structure céramique en nid d'abeilles (2) dans laquelle les extrémités des cellules adjacentes de la structure en nid d'abeilles (2) sont bouchées en alternance, caractérisé en ce que l'élément de filtration (1a) comporte une matière diélectrique ayant un facteur diélectrique plus grande dans une partie au moins du côté d'admission (3a ; 3b ; 3c ; 3d ; 19) et/ou une partie circonférentielle externe (20 ; 21) que dans une partie centrale (5) et/ou une partie d'évacuation (4).

2. Elément de filtration des gaz d'échappement selon la revendication 1, dans lequel le facteur diélectrique du matériau du bouchon du côté d'entrée (3a ; 3b ; 3c ; 3d ; 19) est supérieur à celui du matériau de la structure en nid d'abeilles (2).

3. Elément de filtration des gaz d'échappement selon la revendication 2, dans lequel le matériau du bouchon est composé du même matériau que la structure en nid d'abeilles (2) et d'un matériau ayant un facteur diélectrique supérieur à celui de la structure en nid d'abeilles.

4. Elément de filtration des gaz d'échappement selon la revendication 1, dans lequel la structure en nid d'abeilles (2) est une structure ondulée en nid d'abeilles constituée par superposition de plaques ondulées et de plaques plates formées d'une feuille céramique en alternance et par enroulement de ces feuilles, le facteur diélectrique de la cellule étant plus élevé du côté d'admission sur une longueur déterminée.

5. Elément de filtration des gaz d'échappement selon la revendication 1, dans lequel la structure en nid d'abeilles (2) est une structure ondulée en nid d'abeilles composée par empilement de feuilles ondulées et de feuilles plates formées d'une feuille céramique en alternance et par enroulement, et le facteur diélectrique est réduit progressivement du côté d'admission des gaz vers le côté d'évacuation.

6. Elément de filtration des gaz d'échappement selon la revendication 1, dans lequel la partie circonférentielle externe (20) de la structure céramique en nid d'abeilles (2) est une couche protectrice externe.

7. Elément de filtration des gaz d'échappement selon la revendication 1, dans lequel la partie circonférentielle externe (21) de la structure céramique en nid d'abeilles (2) est formée d'une partie circonférentielle externe et de plusieurs couches de structure en nid en d'abeilles partant de la circonférence externe, et le facteur diélectrique est réduit progressivement vers la couche interne.

8. Elément de filtration des gaz d'échappement selon l'une quelconque des revendications 1 à 7, dans lequel la structure céramique en nid d'abeilles est composée de fibres minérales réfractaires et de poudres de matières premières céramiques.

9. Elément de filtration des gaz d'échappement selon la revendication 8, dans lequel les fibres minérales réfractaires sont formées d'au moins un type choisi dans le groupe qui comprend les fibres de silice, les fibres d'aluminosilicate, les fibres d'alumine et les fibres d'aluminoborosilicate.

10. Elément de filtration des gaz d'échappement selon la revendication 1 à 8, dans lequel la structure céramique est composée d'un carbure, d'un oxyde ou d'un titanate choisis dans le groupe comprenant le carbure de silicium, l'oxyde de titane, l'oxyde de zinc, le titanate de strontium et le titanate de baryum, en plus des fibres minérales réfractaires et des poudres de matières premières céramiques.

11. Elément de filtration des gaz d'échappement selon la revendication 10, dans lequel le carbure et l'oxyde incorporés sont utilisés sous forme de trichites ou de fibres.

12. Appareil de traitement de gaz d'échappement comprenant un élément de filtration de gaz d'échappement et un dispositif d'irradiation de l'élément de filtration des gaz d'échappement par des microondes, caractérisé en ce que l'appareil comporte un élément de filtration de gaz d'échappement selon l'une quelconque des revendications 1 à 11.
